# EUROPÄISCHE PATENTSCHRIFT

(11) **EP 1 439 981 B1**
(45) Veröffentlichungstag und Bekanntmachung des Hinweises auf die Patenterteilung: **10.10.2007**
(21) Anmeldenummer: 02754982.3
(22) Anmeldetag: 07.08.2002
(51) Int. Cl.: B60R 1/072

(54) **ANTRIEBSANORDNUNG ZUM GESTEUERTEN MEHRACHSIGEN VERSTELLEN, INSBESONDERE EINES KRAFTFAHRZEUG-RÜCKBLICKSPIEGELS**
DRIVE ARRANGEMENT FOR CONTROLLED MULTI-AXIS ADJUSTMENT IN PARTICULAR OF A MOTOR VEHICLE REAR-VIEW MIRROR
SYSTEME D'ENTRAINEMENT POUR DEPLACER DE FA ON COMMANDEE SELON PLUSIEURS AXES, NOTAMMENT UN RETROVISEUR DE VEHICULE AUTOMOBILE

(30) Priorität: 25.10.2001 DE 10152813
(43) Veröffentlichungstag der Anmeldung: 28.07.2004
(73) Patentinhaber: EM Kunststofftechnik GmbH, 07806 Neustadt an der Orla (DE)
(72) Erfinder: ENGELMANN, R., Alfred, 07819 Weltwitz (DE); KUNZE, Ralf, 07745 Jena (DE); BADER, Daniel, 98544 Zella-Mehlis (DE)
(74) Vertreter: Kruspig, Volkmar
(86) Internationale Anmeldenummer: PCT/EP2002/008790
(87) Internationale Veröffentlichungsnummer: WO 2003/035432

(56) Entgegenhaltungen:
- EP-A- 0 460 666
- EP-A- 1 063 125
- DE-A- 19 909 233

## Beschreibung

Die Erfindung betrifft eine Antriebsanordnung zum gesteuerten mehrachsigen Verstellen, insbesondere eines Kraftfahrzeug-Rückblickspiegels, umfassend ein kugelkalottenförmiges feststehendes sowie ein bewegliches Gehäuseteil, wobei letzteres eine Spiegelglashalterung aufweist, mindestens zwei im feststehenden Gehäuseteil befindliche Elektromotoren mit je einem Untersetzungsgetriebe, Mittel zum Übertragen der Verstellkräfte auf das bewegliche Gehäuseteil sowie eine Kugelgelenkführung zwischen feststehendem und beweglichem Gehäuseteil, gemäß Oberbegriff des Patentanspruchs 1.

Aus der EP 1 063 125 A1 ist ein Stellantrieb für ein Kraftfahrzeug vorbekannt, wobei es dort darum geht, ein besonders hohes Verstellmoment und eine über die Lebensdauer möglichst konstante Reibkraft zu erreichen, wobei eine geringe Teileanzahl gegeben sein soll und auf eine einfache Montierbarkeit abgestellt wird. Gemäß der dortigen Lehre soll zumindest ein Reibelement mit einem Verstellelement ein einstückiges Mittel bilden, welches als Verbindungselement wirkt. Durch die Anordnung von Reib-Verstellelementen an der Außenseite eines ersten Elements ist ein besonders hohes Verstellmoment möglich und es ergibt sich durch den großen Reibradius eine hohe Vibrationsdämpfung mit ebenfalls großer Haltekraft. Ein vorgesehenes Reib-Verstellelement besteht aus einem Metallband oder einem Verbundteil mit mindestens einem verzahnten Bereich, wobei die Verzahnung bevorzugt in das Metallband eingeprägt ist. Ebenso wird aufgezeigt, daß das Reib-Verstellelement auch als ein Kunststoffteil ausgebildet sein kann. In einer Alternative wird auf eine mehrgliedrige Kette verwiesen, die das Verstellelement und das Reibelement bildet, wobei die Kette auch zugbelastet ist. Ein Antrieb greift in oder zwischen die Kettenglieder ein, um Kräfte übertragen zu können, so daß eine gesonderte Verzahnung entfallen kann.
Um eine Verschwenkung um zwei zueinander senkrechte Achsen zu erreichen, sind jeweils zwei Reib-Verstellelemente oder zwei Ketten vorgesehen.
Problematisch bei der vorgestellten Lösung ist, daß die Reibelemente nahezu ungeschützt im Außenbereich eines kugelkalottenförmigen Gehäuses angebracht sind und daß eine Handverstellung und damit ein Notbetrieb nur schwer möglich ist. In dem Fall, wenn der gezeigte Stellantrieb mit einer Memoryfunktion versehen sein soll, sind zusätzliche Positionsermittlungseinrichtungen erforderlich, die mit den Reib-Verstellelementen zu koppeln sind.

Die DE 199 09 233 A beschreibt eine Anordnung, die dem Oberbegriff des Anspruch 1 entspricht.

Gemäß dem Stellantrieb zum Verschwenken eines Rückblickspiegels für Kraftfahrzeuge nach DE 199 09 233 A1 soll zur Verringerung des Bauraums anstelle von bekannten Flachankermotoren auf solche Antriebe zurückgegriffen werden, die eine geringe Drehzahl aufweisen und welche ohne mechanische Kommutierung betreibbar sind. Als Verstellelement wird eine Spindel, eine Zahnstange oder ein Zahnradsegment verwendet. Durch die geringe Drehzahl des gemäß DE 199 09 233 A1 einzusetzenden Antriebsmotors wird die Geräuschbelastung reduziert und es soll ein niedriges Untersetzungsverhältnis eines vorgesehenen Getriebes ermöglichen, den Spiegel manuell zu betätigen, ohne daß eine Rutsch- oder Rastkupplung vorzusehen ist. Bei dieser manuellen Betätigung wird der Rotor des Antriebsmotors zurückgedreht, wobei dieser als Generator wirkt, mit der Folge, daß Spannungsimpulse in die vorhandene Wicklung induziert werden, die wiederum über eine Elektronik ausgewertet werden können, um die Relativbewegung des Spiegels zu ermitteln und um diesen in die ursprüngliche Position zurückzuführen. Konkret wird für die Antriebsmotoren auf besonders geeignete Schrittmotoren oder Synchronmotoren verwiesen. Weiterhin zeigt die DE 199 09 233 A1 auf, daß es zweckmäßig sei, auf eine gesonderte Ansteuerung für den Schrittmotor direkt im Stellantrieb zu verzichten. Dies erfordert jedoch eine Verlagerung der Ansteuerelektronik hinein in das Fahrzeug.

Aus dem Vorgenannten ist es daher Aufgabe der Erfindung, eine weiterentwickelte Antriebsanordnung zum gesteuerten mehrachsigen Verstellen insbesondere eines Kraftfahrzeug-Rückblickspiegels anzugeben, wobei diese als intelligente Einrichtung zu gestalten ist mit dem Ziel einer höchstmöglichen Integration elektrischer bzw. elektronischer Funktionen.

Weiterhin geht es erfindungsgemäß darum, mechanisch-konstruktiv mit geringen Verstellkräften arbeiten zu können, um eine Handverstellung für den Notbetrieb zu erreichen, letztendlich aber auch für eine ausreichende Spiegeldämpfung, insbesondere bei hohen Fahrzeuggeschwindigkeiten Sorge zu tragen. Die erreichte Dämpfung und systemeigene Stäbilität gegen unerwünschtes Verstellen darf jedoch hierbei nicht die gewollte Möglichkeit des vorerwähnten Notbetriebs einschränken oder z.B. zur Beschädigung von Elementen des Antriebs oder des Spiegelglases bei Handverstellung führen.

Die Lösung der Aufgabe der Erfindung erfolgt mit einer Antriebsanordnung gemäß der Merkmalskombination nach Patentanspruch 1, wobei die Unteransprüche mindestens zweckmäßige Ausgestaltungen und Weiterbildungen darstellen.

Bei der erfindungsgemäßen Lehre einer Antriebsanordnung zum gesteuerten mehrachsigen Verstellen, insbesondere eines Kraftfahrzeug-Rückblickspiegels, wird auf an sich bekannte kugelkalottenförmige Gehäuseteile zurückgegriffen, wobei ein bewegliches Gehäuseteil die Spiegelglashalterung aufweist. Im feststehenden Gehäuseteil befinden sich Antriebsmotoren mit einem entsprechenden Untersetzungsgetriebe sowie Mittel zum Übertragen der Verstellkräfte auf das bewegliche Gehäuseteil. Die Gehäuseteile sind untereinander bevorzugt mit einer Kugelgelenkführung gehalten und schwenkbeweglich fixiert.

Offenbarungsgemäß sind am beweglichen Gehäuseteil zwei im wesentlichen um 90° versetzte, die Kugelkalottenform des feststehenden Gehäusesteils aufnehmende kreissegmentförmige Innenzahnradelemente angeformt oder in Wirkverbindung mit der Spiegelglashalterung stehend, wobei die Elemente im wesentlichen einer bogenförmigen Zahnstange entsprechen. Diese bogenförmigen Zahnstangen reichen in das Innere des feststehenden Gehäuseteils hinein und wirken mit den dort befindlichen Untersetzungsgetrieben zusammen. Konkret erfolgt ein Kämmen mit jeweils einem Geradstirnzahnrad zur Kraftübertragung sowie zur Verschiebung der Zahnstange und letztendlich der Spiegelglashalterung bzw. Spiegelaufnahme.

Erfindungsgemäß sind am beweglichen Gehäuseteil mehrere über den Gehäuseumfang im wesentlichen gleich verteilte federartige, nach unten gerichtete Fortsätze oder Laschen vorhanden, welche sich an Außenumfangsabschnitten des feststehenden Gehäuseteils, bei Bewegung gleitend, abstützen. Über diese federartigen Fortsätze, die quasi das feststehende Gehäuseteil klammerartig umgreifen, wird eine Führung der Gehäuseteile untereinander mit gewünschter Stabilität, aber auch mit positiven Einflüssen auf die Dämpfung des Gesamtsystems erreicht.

Letztendlich befindet sich im Inneren des feststehenden Gehäuseteils noch eine zusätzliche, die vorzugsweise Schrittmotoren und die dort befindlichen Getriebe schützende Abdeckung.

Mit den vorstehend genannten Merkmalen gelingt es, alle für die Verstellbewegung relevanten mechanischen Elemente geschützt in einem einzigen Gehäusekörper unterzubringen, so daß sich eine besonders hohe Zuverlässigkeit auch unter extremen Einsatzbedingungen ergibt.

Zur Minimierung des notwendigen Bauraums sind die Achsen der Elektromotoren im wesentlichen parallel verlaufend zueinander angeordnet und die Motoren selbst dicht benachbart. Über eine Kegelradpaarung wird ein 45°-Versatz erreicht und es erfolgt die Kraftübertragung auf die Geradstirnrad-Antriebsräder für die Zahnstangen bzw. die Innenzahnradelemente. Die Geradstirnrad-Antriebsräder schließen einen Winkel von bevorzugt 90° ein.

Die Gesamtkonstruktion des Gehäuses läßt sich als Split-Level betrachten, wobei das feststehende Gehäuseteil in einer unteren, ersten Ebene einen Freiraum für die Ansteuer- und Auswerteelektronik sowie in einen darüber befindlichen zweiten Raum bzw. zweite Ebene für die Motoren und Getriebe unterteilt ist. Die erste Ebene ist durch einen äußeren Abschlußdeckel zugänglich gehalten.

Ausgestaltend befinden sich am feststehenden Gehäuseteil säulenartige oder zylindrische Befestigungsbolzen, die gleichzeitig die Gehäusekalotte stabilisieren.

Die erwähnten Fortsätze oder Laschen am oberen, beweglichen Gehäuseteil sind bevorzugt jeweils paarweise gegenüberliegend ausgebildet und besitzen eine Länge, die im wesentlichen der Hälfte der Höhe der Kugelkalotte des feststehenden Gehäuseteils entspricht.

Im Gleitbereich der Zahnstangen ist das feststehende Gehäuseteil so ausgebildet, daß dieses eine Nutführung aufweist oder einen Teil einer solchen Führung darstellt. In einer Ausführungsform besitzt die Zahnstange einen im wesentlichen U-förmigen Querschnitt, wobei am feststehenden Gehäuseteil ein Fortsatz vorhanden ist, der in den offenen Bereich des U eingreift zum Zweck der erwähnten Gleitführung.

Bei der beschriebenen ersten Ausführungsform sind die Innenzahnradelemente kreissegmentförmig und bilden quasi einen Viertelkreis. Alternativ können Halbkreis-Segmente zum Einsatz kommen, welche dann quasi diagonal sich über das Gehäuse bzw. den Gehäuseboden erstrecken. Diese halbkreisförmigen Zahnstangen können dann an ihren Enden jeweils einen Befestigungspunkt für die Spiegelglashalterung besitzen mit der Folge, daß größere Kräfte aufgenommen werden können, was insbesondere beim Hand- oder Notbetrieb von Vorteil ist.

Das zum Einsatz kommende dreistufige Getriebe ist einerseits nicht selbsthemmend, setzt aber andererseits unerwünschten Verstellkräften, z.B. bei hohen Geschwindigkeiten, einen ausreichenden Widerstand entgegen, so daß die gewünschte Dämpfung gemäß Aufgabenstellung erreichbar ist.

In einer Ausführungsform erfindungsgemäß eingesetzter Schrittmotoren oder Piezo-Stellelemente können diese, z.B. in Abhängigkeit von der Fahrgeschwindigkeit, mit einer definierten Spannung beaufschlagt werden, so daß sich ein Widerstand gegenüber unerwünschtem Verstellen ergibt, der quasi als Bremskraft aus der Anordnung heraus bedingt durch die elektronische Arretierung des Motors bezeichnet werden kann.

Das Konzept vorliegender Erfindung sieht vor, eine Elektronik zu integrieren, die es gestattet, den Spiegel als Modul möglichst unabhängig vom Rest eines Kraftfahrzeugs auszuführen, so daß dieser ein eigenständiges komplettes Teilelement darstellt. Hierfür ist eine Steuerung vorgesehen, die LIN-busfähig ist. Diese Steuerung kann beispielsweise an ein Subnetzwerk angeschlossen werden, welches sich in der Kraftfahrzeugtür befindet.

Bei einer Ausführungsform der Erfindung weist die integrierte Steuerung die Möglichkeit, zum unmittelbaren Antreiben der Schrittmotoren über Leistungstreiber, eines Softwareanschlags der Schrittmotoren vor dem Hardwareanschlag dieser, des Erkennens einer manuellen Verstellung des Spiegelglases und selbsttätiger Referenzierung dieses auf den vorherigen Wert sowie eine Speicherfunktion für eine bevorzugte oder mehrere Spiegeleinstellungen auf. Ergänzend kann die Steuerung auch eine Anklappeinrichtung respektive einen Anklappmotor aktivieren bzw. diesen mit Erreichen der Anschlagposition abschalten.

Weitere Funktionen, die von der Elektronik erfüllt werden können, sind das Aktivieren der Spiegelheizung sowie das Abschalten dieser nach einer vorgegebenen Heizzeit, das Ein- und Ausschalten eines Türaußenlichts, das Aktivieren einer elektrochromatischen Glasbeschichtung zur Veränderung des Spiegelreflexionsgrads und vieles mehr.

Zum Zweck der angestrebten Universalität der Antriebsanordnung einschließlich integierter Elektronik sowohl für z.B. links- als auch rechtsseitige Außenspiegel werden durch ihre Form kodierte Anschlußstecker oder Steckverbinder eingesetzt. Hierdurch gelingt es in Verbindung mit der übergeordneten, zentralen Steuerung des Kraftfahrzeugs zum einen Informationen über die Einsatzlage als auch z.B. über den Typ des jeweiligen Fahrzeugs zu gewinnen, so daß hiernach über eine vorhandene Software eine Grundkalibrierung des Spiegelantriebs erfolgt, und zwar ohne daß es aufwendiger Manipulationen beim Fahrzeughersteller bedarf.

Die Elektronik besitzt zur Kommunikation mit einem übergeordneten Bussystem einen erwähnten LIN-Transceiver sowie einen Mikrocontroller, welcher zur Kommunikation dient und der die Ansteuerung der Leistungsstellglieder bewirkt, welche wiederum die Schrittmotoren für die Spiegelglasverstellung und/oder den Antriebsmotor für den Anklappmechanismus aktivieren.

Die Leistungsendstufen zur Umwandlung der Controllersignale in die notwendigen Phasenströme für den Motor verarbeiten hier Taktbefehle, das Ein- und Ausschalten sowie die Vorgabe der Drehrichtung. Weiterhin ist eine Schaltung zur Schrittdetektion integriert, die dazu dient, beim manuellen Verstellen und generatorischem Motorbetrieb die momentane Position zu erfassen und gegebenenfalls zu korrigieren. Zum Zweck dieser Funktion ist es notwendig, die Elektronik mit Dauerstrom, sogenanntem Dauerplus, zu versorgen.
Aus Sicherheitsgründen ist es zweckmäßig, beim Überschreiten eines vorgegebenen maximalen Stromwerts das System in einen stromlosen Zustand zu überführen, um beispielsweise bei Beschädigungen durch Vandalismus oder dergleichen ein unerwünschtes Entladen der Kraftfahrzeug-Batterie zu vermeiden.

Die ebenfalls integrierbare Schaltung für den z.B. Gleichstromantrieb des Anklappmotors weist eine Einrichtung zur Erkennung des Stromaufnahme-Anstiegs auf, der im Regelfall dann auftritt, wenn der Motor gegen einen Widerstand läuft respektive seine Anklapp- oder Endposition erreicht hat.

Zur optimalen Ausnutzung des Bauraums im kalottenförmigen Gehäuse können flexible Leiterplatten mit einer entsprechenden Bestückung Einsatz finden. Flexible Anschlußdrähte, die zu Kontaktpins führen, welche mit einer Spiegelglas-Heizbeschichtung in Verbindung stehen, dienen ebenso wie gehäuseseitig ausgeführte Snap-in-Verbindungen der Minimierung des Montageaufwands bzw. des Aufwands beim Komplettieren der Antriebsanordnung mit einem entsprechenden Spiegelglas und der Integration in ein Außengehäuse.

Dadurch, daß im Antrieb selbst alle wesentlichen elektronischen Steuerungsfunktionen integriert sind, besteht beispielsweise die Möglichkeit, am Spiegelaußengehäuse einen Taster oder eine ähnliche Schalteinrichtung vorzusehen, mit deren Hilfe auch nach Verlassen des Fahrzeugs und Abschalten der Zündung z.B. ein Anklappen des Spiegels oder ein Aktivieren einer Momentanbeleuchtung erfolgen kann.

Die Erfindung soll nachstehend anhand eines Ausführungsbeispiels sowie unter Zuhilfenahme einer Figur näher erläutert werden.

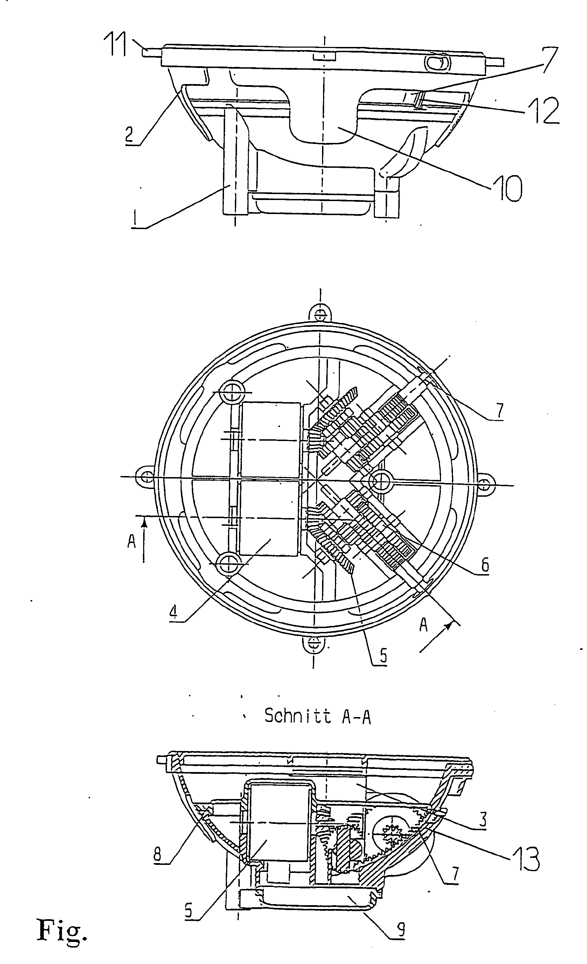

Die Figur zeigt hierbei eine seitliche Darstellung der Antriebsanordnung mit feststehendem und beweglichem Gehäuseteil sowie der Spiegelglashalterung, eine Innenansicht mit den Schrittmotoren sowie Untersetzungsgetrieben und einen Schnitt längs der Linie A-A gemäß Figur, Abbildung Mitte.

Wie in der Figur erkennbar, besitzt die Antriebsanordnung ein feststehendes Gehäuseteil 1 mit z.B. zylindrischen Befestigungsbolzen, die über den Umfang verteilt vorgesehen sind.
Ein bewegliches Gehäuseteil 2 weist federlaschenartige Fortsätze 10, die die Kugelkalottenform des feststehenden Gehäuseteils 1 teilumgreifen, um für eine zusätzliche Führung zu sorgen.
Zwischen feststehendem Gehäuseteil 1 und dem beweglichen Gehäuseteil 2 befindet sich eine Kugelgelenkführung 3.

Das bewegliche Gehäuse 2 kann als integrales, aber auch als extra Bauteil die eigentliche Spiegelglashalterung 11 umfassen.

Die Schrittmotoren 4 sind eng benachbart mit paralleler Achsenlage im Gehäuseinneren befindlich und weisen abtriebsseitig Kegelräder auf, die mit einem weiteren Kegelrad 5 des Getriebes 6 eine entsprechende Paarung bilden.

Jeweils zwei Zahnstangen 7 kämmen mit einem Geradstirnzahnrad des Getriebes, mit der Folge, daß die eine Kreissegmentform aufweisenden Zahnstangen sich nach oben oder unten bewegen können, um auf diese Weise die gewünschte mehrachsige Verstellung der Spiegelglashalterung 11 respektive eines dort befestigten Spiegels zu gewährleisten.

Gemäß Ausführungsbeispiel sind die bogenförmigen Zahnstangen 7 mit einem U-förmigen Querschnitt gestaltet. Die entsprechende Ausnehmung 12 der Zahnstange 7 wirkt mit einem Gehäusefortsatz, eine Führung bildend, zusammen. Die entstandende Nut-Feder-Führung ist in der Figur, Schnitt A-A mit dem Bezugszeichen 13 dargestellt.

Eine schützende Abdeckung 8 befindet sich im Inneren des feststehenden Gehäuseteils. Diese Abdeckung 8 kapselt die Motoren sowie die Getriebe und einen Teil der bogenförmigen Zahnstangen 7. Hiernach ergibt sich ein doppelter Schutz dadurch, daß einerseits die Zahnstangen im Inneren des Gehäuses verlaufen und zusätzlich der Getriebe- und Motorenraum mittels Abdeckung 8 gekapselt ist.

In einem unteren Raum 9 des feststehenden Gehäuseteils 1 befindet sich die erforderliche Ansteuer- und Auswerteelektronik (nicht gezeigt). Dort sind auch die notwendigen Schnittstellen für die Stromversorgung bzw. die LIN-Busverbindung vorhanden.

Zur Lösung des Widerspruchs der gewünschten Leichtgängigkeit des Getriebes und geringer Verstellkräfte einerseits und der notwendigen Dämpfung bzw. Hemmung des Sytems gegen unerwünschtes Verstellen bei hohen Geschwindigkeiten andererseits ist vorgesehen, die elektronische Ansteuerschaltung für die Schrittmotoren mit einem solchen Modus zu versehen, daß ein elektrisches Blockieren der Motoren möglich ist, indem diese quasi Haltekräfte erzeugen. Eine solche Elektronik ist bei Schrittmotoren durch die notwendige mehrphasige Ansteuerung leicht umzusetzen.

Gemäß Ausführungsbeispiel wird von einem dreistufigen Getriebe ausgegangen, welches auf die Drehzahlen handelsüblicher Schrittmotoren abgestimmt ist. Selbstverständlich liegt es im konstruktiven Ermessen des hier tätigen Fachmanns, auch ein Getriebe andersartiger Stufung vorzusehen, und zwar in Abstimmung mit den notwendigen Stellkräften einerseits und den Motoreigenschaften andererseits.

Es hat sich gezeigt, daß durch die Kugelkalottenform der Gehäuseteile mit im Bodenbereich zulaufender Befestigungsmöglichkeit über die z.B. vorerwähnten Bolzen oder Zylinderfortsätze eine kompakte Anordnung vorliegt, die besonders günstig in Luftwiderstandsbeiwert-optimierte Spiegelaußengehäuse einbaubar ist.

Bezüglich der Eigenstabilität des Systems beim Verstellen bzw. beim Erreichen der Verstellend- oder Sollage ist die Wechselwirkung zwischen der Nut-Führung der bogenförmigen Zahnstangen und das Umgreifen oder Klammern der federartigen Fortsätze oder Laschen mit funktionsbestimmend, da diese Elemente jeweils mit der Innen- bzw. Außenseite der Kugelkalotte des feststehenden Gehäuseteils in gleitbeweglicher Verbindung stehen.

Alles in allem gelingt es mit der Erfindung, eine mit Blick auf Funktionalität und Multivalenz wesentlich verbesserte Antriebsanordnung zum gesteuerten mehrachsigen Verstellen insbesondere eines Kraftfahrzeug-Rückblickspiegels anzugeben, die sowohl von der mechanisch-konstruktiven Seite her über eine hohe Zuverlässigkeit verfügt und welche in der Lage ist, durch eine vorhandene intelligente Steuerung und unter Nutzung eines Bussystems Managementaufgaben zu übernehmen, die ansonsten von der Elektronik des Kraftfahrzeugs selbst zu bewältigen sind.

### Bezugszeichenliste

- 1: feststehendes Gehäuseteil
- 2: bewegliches Gehäuseteil
- 3: Kugelgelenkführung zwischen feststehendem und beweglichem Gehäuseteil
- 4: Schrittmotoren
- 5: Kegelrad
- 6: Getriebe
- 7: bogenförmige Zahnstange
- 8: Deckel oder Kapselung für Motor/Getrieberaum
- 9: Freiraum für Ansteuer- und Auswertelektronik in der ersten, unteren Ebene des feststehenden Gehäuseteils 1
- 10: federartige Fortsätze oder Laschen
- 11: Spiegelglashalterung
- 12: Ausnehmung in der bogenförmigen Zahnstange 7
- 13: Führung zwischen bogenförmiger Zahnstange 7 und einem angeformten Fortsatz des Gehäuses

## Patentansprüche

1. Antriebsanordnung zum gesteuerten mehrachsigen Verstellen, insbesondere eines Kraftfahrzeug-Rückblickspiegels,
umfassend ein kugelkalottenförmiges feststehendes (1) sowie ein bewegliches (2) Gehäuseteil, wobei letzteres eine Spiegelglashalterung (11) aufweist, mindestens zwei im feststehenden Gehäuseteil befindliche Elektromotoren (4) mit je einem Untersetzungsgetriebe (6), Mittel zum Übertragen der Verstellkräfte auf das bewegliche Gehäuseteil sowie eine Kugelgelenkführung (3) zwischen feststehendem und beweglichem Gehäuseteil (1; 2), weiterhin am beweglichen Gehäuseteil (2) zwei im wesentlichen um 90° versetzte, die Kugelkalottenform des feststehenden Gehäuseteils aufnehmende, kreissegmentförmige Innenzahnradstangen (7) angeformt sind oder mit dem beweglichen Gehäuseteil (2) in Wirkverbindung stehen, die in das Innere des feststehenden Gehäusesteiles (1) zu den dort befindlichen Untersetzungsgetrieben (6) hineinreichen, um mit jeweils einem Geradstirnzahnrad zu kämmen,
**dadurch gekennzeichnet, daß**
am beweglichen Gehäuseteil (2) mehrere über dem Gehäuseumfang im wesentlichen gleichverteilte federartige Fortsätze oder Laschen (10) vorhanden sind, welche sich an Außenumfangsabschnitten des festen Gehäuseteiles (1) bei Bewegung gleitend, abstützen und im Inneren des festen Gehäuseteiles (1) eine die Motoren (4) und die Getriebe (6) schützende Abdeckung (8) angebracht ist, wobei die Fortsätze oder Laschen (10) jeweils paarweise gegenüberliegend ausgebildet sind und eine Länge aufweisen, die im wesentlichen der Hälfte der Höhe der Kugelkalotte des feststehenden Gehäuseteiles entspricht und im Gleitbereich der Zahnstangen (7) das feststehende Gehäuseteil (1) jeweils eine Nutführung (13) aufweist.

2. Anordnung nach Anspruch 1,
**dadurch gekennzeichnet,daß**
die Achsen der Elektromotoren (4) im wesentlichen parallel verlaufen, wobei über eine im wesentlichen 45°-Kegelradpaarung eine im wesentlichen um 90° versetzte Ausbildung der Stirnradantriebszahnräder für die Innenzahnradstangen (7) realisiert ist.

3. Antriebsanordnung nach Anspruch 1 oder 2,
**dadurch gekennzeichnet,daß**
das feststehende Gehäuseteil (1) in einer ersten, unteren Ebene einen Freiraum (9) für Ansteuer- und Auswerteelektronik sowie in einer darüber befindlichen zweiten Ebene den Raum für die Motoren und Getriebe aufweist.

4. Antriebsanordnung nach Anspruch 3,
**dadurch gekennzeichnet, daß**
die erste Ebene durch einen äußeren Abschlußdeckel zugängig ist.

5. Antriebsanordnung nach einem der vorangegangenen Ansprüche,
**dadurch gekennzeichnet, daß**
am festen Gehäuseteil säulenartige oder zylindrische Befestigungbolzen angeformt sind.

6. Antriebsanordnung nach einem der vorangegangenen Ansprüche,
**dadurch gekennzeichnet, daß**
die Elektromotoren für die Spiegellage langsam drehende Schrittmotoren (4) sind.

7. Antriebsanordnung nach Anspruch 6,
**dadurch gekennzeichnet, daß**
die Elektronikbaugruppe eine Auswerteeinrichung für von den Motoren generierte oder induzierte Impulse aufweist, um bei Handverstellung die Lageposition der Spiegelglashalterung bzw. des Spiegels zu ermitteln und zu registrieren.

8. Antriebsanordnung nach einem der vorangegangenen Ansprüche,
**dadurch gekennzeichnet,daß**
die Elektronikbaugruppe Schaltungen zur Steuerung der Spiegelheizung, der elektrochromatischen Glasbeschichtung, des Antriebs zum Anklappen des Spiegelgehäuses, einer Außenbeleuchtung und/oder zur Speicherung von Verstell- und Fahrbefehlen zum Zweck der Spiegeleinstellung bei mehreren Nutzern oder unterschiedlichen Betriebszuständen des Kraftfahrzeugs aufweist.

9. Antriebsanordnung nach Anspruch 8,
**dadurch gekennzeichnet, daß**
die Elektronikbaugruppe einen Adapter zur Ansteuerung und Übertragung von Daten über ein Fahrzeugbussystem enthält.

10. Antriebsanordnung nach Anspruch 9,
**dadurch gekennzeichnet, daß**
ein Buskoppler, ein Mikrocontroller sowie Leistungsstellglieder umfassende Baugruppen vorgesehen sind.

11. Antriebsanordnung nach einem der Ansprüche 7 bis 10,
**dadurch gekennzeichnet, daß**
die externen Anschlußelemente eine funktionsdefinierende Kodierung aufweisen.

## Claims

1. A drive arrangement for controlled multi-axis adjustment, in particular of a motor vehicle rearview mirror, having a fixed (1) as well as a movable (2) spherical housing section, wherein the latter comprises a mirror glass mounting (11), at least two electromotors (4) located in the fixed housing section, each with a reduction gear (6), means for conveying the adjustment forces to the movable housing section as well as a ball-joint guide (3) between the fixed and movable housing sections (1; 2), with two internal gear racks (7) formed as circular segments essentially offset by 90° on the movable housing section (2) receiving the spherical fixed housing section further formed on or operatively interacting with the movable housing section (2), same extending into the interior of the fixed housing section (1) to the reduction gear (6) located therein so as to each engage respectively with a spur gearwheel,
**characterized in that**
spring-type projections or plates (10) are distributed substantially evenly around the housing circumference of the movable housing section (2) and are supported on external circumferential sections of the fixed housing section (1) so as to slide during movement, and a cover (8) is mounted in the interior of the fixed housing section (1) to protect the motor (4) and the gear mechanism (6), wherein the projections or plates (10) are each configured as opposing pairs and exhibit a length which essentially corresponds to half the height of the spherical cap of the fixed housing section and each exhibiting a groove guide (13) in the sliding region of the gear rack (7) of fixed housing section (1).

2. The arrangement according to claim 1,
**characterized in that**
the axes of the electromotors (4) extend substantially parallel, wherein an essentially 90°-offset configuration of the spur drive gearwheels for the inner gear rack (7) is realized by an essentially 45° bevel gear pairing.

3. The drive arrangement according to claim 1 or 2,
**characterized in that**
the fixed housing section (1) comprises a free space (9) for control and evaluating electronics in a first, lower plane as well as the space for the motor and gear mechanism in a second plane located above same.

4. The drive arrangement according to claim 3,
**characterized in that**
the first plane is accessible through an outer cover plate.

5. The drive arrangement according to any one of the preceding claims,
**characterized in that**
column-shaped or cylindrical fixing bolts are formed on the fixed housing section.

6. The drive arrangement according to any one of the preceding claims,
**characterized in that**
the electromotors for the mirror position are slowly-rotating stepper motors (4).

7. The drive arrangement according to claim 6,
**characterized in that**
the electronics module comprises an evaluation device for the pulses generated or induced by the motors in order to determine and record the position of the mirror glass mounting, the mirror respectively, upon manual adjustment.

8. The drive arrangement according to any one of the preceding claims,
**characterized in that**
the electronics module comprises circuits for controlling the mirror heating, the electrochromatic glass coating, the drive for folding in the mirror housing, an exterior illumination and/or for the purpose of saving the adjustment and movement commands when the mirror is adjusted by multiple users or for different operational states of the vehicle.

9. The drive arrangement according to claim 8,
**characterized in that**
the electronics module comprises an adapter for the control and transmission of data with a vehicle bus system.

10. The drive arrangement according to claim 9,
**characterized in that**
modules comprising a bus coupler, a microcontroller and power actuators are provided.

11. The drive arrangement according to any one of claims 7 to 10,
**characterized in that**
the external connection elements have a function-defining coding.

## Revendications

1. Système d'entraînement pour le déplacement commandé selon plusieurs axes, en particulier d'un rétroviseur de véhicule automobile,
comportant une partie de boîtier en forme de calotte sphérique fixe (1) ainsi qu'une partie de boîtier mobile (2), cette dernière présentant une monture de verre à miroir (11), au moins deux moteurs électriques (4) situés dans la partie de boîtier fixe et comprenant chacun un démultiplicateur (6), des moyens pour transmettre les forces de déplacement à la partie de boîtier mobile, ainsi qu'un guidage à articulation sphérique (3) entre les parties de boîtier fixe et mobile (1 ; 2), en outre deux crémaillères intérieures (7) en forme de segment circulaire recevant la forme de calotte sphérique de la partie de boîtier fixe et décalées sensiblement de 90°, qui sont conformées sur la partie de boîtier mobile (2) ou qui sont en liaison d'action avec la partie de boîtier mobile (2), qui s'étendent jusqu'à l'intérieur de la partie de boîtier fixe (1) vers les démultiplicateurs (6) qui s'y trouvent, afin d'engrener respectivement avec une roue à denture droite,
**caractérisé en ce que**
il est prévu plusieurs prolongements ou pattes (10) analogues à des ressorts sensiblement en répartition régulière sur la périphérie de boîtier sur la partie de boîtier mobile (2) qui, lors d'un mouvement, prennent appui en coulissement contre les portions de périphérie extérieure de la partie de boîtier fixe (1), et **en ce qu'**un recouvrement (8) protégeant les moteurs (4) et les démultiplicateurs (6) est agencé à l'intérieur de la partie de boîtier fixe (1), les prolongements ou les pattes (10) étant réalisés en étant par paire mutuellement opposés et présentant une longueur qui correspond sensiblement à la moitié de la hauteur de la calotte sphérique de la partie de boîtier fixe, et **en ce que** la partie de boîtier fixe (1) présente un guidage à gorge respectif (13) dans la zone de coulissement des crémaillères (7).

2. Système selon la revendication 1,
**caractérisé en ce que**
les axes des moteurs électriques (4) s'étendent sensiblement parallèlement, une configuration des roues à denture droite décalées sensiblement de 90° pour les crémaillères intérieures (7) étant réalisée par un appariement de roues coniques sensiblement à 45°.

3. Système d'entraînement selon la revendication 1 ou 2,
**caractérisé en ce que**
dans un premier plan inférieur, la partie de boîtier fixe (1) présente un intervalle libre (9) pour une unité électronique de pilotage et d'évaluation, et dans un second plan situé au-dessus, elle présente l'espace pour les moteurs et pour les démultiplicateurs.

4. Système d'entraînement selon la revendication 3,
**caractérisé en ce que**
le premier plan est accessible à travers un couvercle de fermeture extérieur.

5. Système d'entraînement selon l'une des revendications précédentes,
**caractérisé en ce que**
des goujons de fixation en forme de colonne ou cylindrique sont conformés sur la partie de boîtier fixe.

6. Système d'entraînement selon l'une des revendications précédentes,
**caractérisé en ce que**
les moteurs électriques pour le positionnement du rétroviseur sont des moteurs pas à pas (4) tournant lentement.

7. Système d'entraînement selon la revendication 6,
**caractérisé en ce que**
le sous-ensemble électronique comprend un dispositif d'évaluation pour des impulsions générées ou induites par les moteurs, afin de détecter et d'enregistrer la position de la monture de verre à miroir ou du rétroviseur lors d'un déplacement à la main.

8. Système d'entraînement selon l'une des revendications précédentes,
**caractérisé en ce que**
le sous-ensemble électronique comprend des circuits pour commander le chauffage de rétroviseur, le revêtement de verre électro-chromatique, l'entraînement pour rabattre le boîtier de rétroviseur, un éclairage extérieur et/ou pour mémoriser des ordres de déplacement ou de circulation en vue du réglage du rétroviseur en cas de plusieurs utilisateurs ou de différents états de fonctionnement du véhicule automobile.

9. Système d'entraînement selon la revendication 8,
**caractérisé en ce que**
le sous-ensemble électronique comprend un adaptateur pour piloter et transmettre des données via un système de bus du véhicule.

10. Système d'entraînement selon la revendication 9,
**caractérisé en ce que**
il est prévu un coupleur de bus, un microcontrôleur ainsi que des sous-ensembles comprenant des organes de réglage de puissance.

11. Système d'entraînement selon l'une des revendications 7 à 10,
**caractérisé en ce que**
les éléments de raccordement externes présentent un codage définissant la fonction.
